(19) **Europäisches Patentamt / European Patent Office / Office européen des brevets**

(11) **EP 4 686 656 A1**

(12) **EUROPEAN PATENT APPLICATION**

(43) Date of publication:
04.02.2026 Bulletin 2026/06

(21) Application number: 24192382.0

(22) Date of filing: 01.08.2024

(51) International Patent Classification (IPC):
*B64G 1/00* (2006.01)      *G02B 17/06* (2006.01)

(52) Cooperative Patent Classification (CPC):
**B64G 1/1007; B64G 1/66; G02B 17/0626;
G02B 17/0642**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: Mbryonics Ltd
**Bóthar le Chéile, Westside H91 XK22 Galway (IE)**

(72) Inventors:
• **FITZGERALD, Niamh**
  **Galway, H91 XK22 (IE)**
• **MACKEY, David**
  **Galway, H91 XK22 (IE)**
• **MACKEY, Ruth**
  **Galway, H91 XK22 (IE)**

(74) Representative: **Murgitroyd & Company**
**165-169 Scotland Street**
**Glasgow G5 8PL (GB)**

(54) **AN OPTICAL TELESCOPE, AND AN OPTICAL TERMINAL SYSTEM COMPRISING THE TELESCOPE**

(57) There is provided a telescope for use in an optical terminal system configured for free space optical communication, FSOC, configured to operate in earth orbit, and/or for terrestrial line-of-sight links. The optical terminal system comprises the telescope and an optical bench. The the telescope (200) is configured to receive an incident light beam (500) and to focus the light beam to a telescope focal plane (250) as input to the optical bench. The telescope comprising: a primary mirror; a secondary mirror; and a tertiary mirror. At least one mirror comprises a freeform mirror configured to control the distribution of light in the focal plane to provide correction of wavefront aberrations across a field of view of the system. Also provided is an optical terminal system comprising the telescope and an optical bench.

FIGURE 1

EP 4 686 656 A1

## Description

### Field of the Invention

The present invention relates to an optical telescope, and an optical terminal system comprising the telescope. In particular, the present invention relates to a telescope for an optical terminal system for free space optical communications. The optical terminal system is configured for free space optical communications, and the telescope configured for free space optical communication applications.

### Background

The field of free space optical communications is considered to provide means for a high efficiency transfer of information for example when compared to other communication systems such as RF communications. There are various constraints around systems for free space optical communications. Typically, a large collection aperture is required to maximise the usable link budget and to reduce the required transmit power. A laser beam transmitted from a ground station or distant satellite will diverge over the propagation distance between the ground or transmit satellite and the receiver satellite. Thus, the maximum photon collection from the transmitted laser beam depends on the largest receiver aperture diameter. Similarly, the narrowness of the divergence of the beam on the transmit side is also improved the larger the transmit aperture. To be effective for use in free space optical communication, a fast optical system capable of high percentage power transmission, having a larger aperture diameter, and capable of operation in the extreme space environment, is required. In addition, volume and mass restrictions apply for space applications.

In one approach, a Communications Space Terminal (LLST) optical terminal for free space optical communications has been described in Optical overview and qualification of the LLCD space terminal, DeVoe 2017 Published in International Conference on Space optics, 17 November 2017. The Cassegrain beryllium telescope has rotationally symmetric optical surfaces and a field of view of $\pm 1$ mrad, with a reduced field of view of 30 $\mu$rad. The aperture of the LLST telescope is 108 mm, the telescope has a central obscuration. While rotationally symmetric systems are provided to reduce aberrations by increasing the optical path length, an increased or long path length is impractical for space-based applications. A central obscuration may cause losses of the order of up 33% of the incident laser light. Further, such a system has relatively high-volume and mass requirements. Therefore, there is a need for an alternative or improved system that meets the requirements for use in space, including maintaining performance in the extreme space environment, and having the optical performance required for free space optical communications.

### Statements of Invention

The scope of the invention is in accordance with the appended claims.

According to a first aspect there is provided a telescope for use in an optical terminal system configured for free space optical communication, FSOC, operating in a satellite orbit, for example in earth orbit, and/or for terrestrial line-of-sight links, the optical terminal system comprising the telescope and an optical bench,

wherein the telescope (200) is configured to receive an incident light beam (400) and to focus the light beam to a telescope focal plane (250) as input to the optical bench;
the telescope comprising:

a primary mirror;
a secondary mirror; and
a tertiary mirror;

wherein at least one mirror comprises a freeform mirror configured to control the distribution of light in the focal plane to provide correction of wavefront aberrations across a field of view of the system.

The telescope advantageously includes at least one freeform mirror. The freeform mirror is configured to provide for control of wavefront aberrations. The telescope as defined advantageously provides a relatively large aperture in a system having a relatively low volume, footprint, and mass, features that are advantageous for a system configured to launch into space aboard a satellite. The optical performance in a compact telescope is achieved including based on control of wavefront aberrations by use of at least one freeform mirror. In an exemplary arrangement, a telescope unit according to an embodiment of the invention comprises a compact diffraction-limited telescope configured to fit into a relatively small compact volume. The primary mirror defines the largest component of the telescope. The telescope is configured for use with an optical terminal system for receive and transmit communications. Advantageously, the telescope is configured to be scalable into larger form factors enabling longer link distances such as for use in Geostationary (GEO) applications.

In one embodiment of the first aspect, at least one mirror comprises an aspheric mirror having an aspheric surface, the aspheric surface having rotational symmetry.

Advantageously, the aspheric mirror has rotational symmetry, the use of an aspheric mirror in the system, simplifies the system to aid in optical assembly integration and test of the telescope unit.

In one embodiment of the first aspect, the telescope comprises an off-axis three-mirror telescope, wherein each mirror has a tilted and decentered local coordinate system with respect to a central axis. The telescope comprises an unobscured mirror.

Advantageously, the telescope comprises three off-axis mirrors, such that rotational symmetry about the mechanical coordinate axis/central mechanical axis is broken. In one arrangement the central mechanical axis coincides with the optical axis of the system. The mirrors are arranged off axis.

In one embodiment of the first aspect, the telescope mirrors are arranged to provide a folded optical path, each of the mirrors is mounted at an angle facing a common central zone, such that the light reflected from each of the mirrors is reflected across the common central zone between the mirrors.

Advantageously, the arrangement of the mirrors to provide a folded optical path supports a compact telescope form. The three mirrors of the system are mounted about a common central optical zone and each facing said zone. The common central optical zone is located centrally relative to the mirrors. This common central zone has a volume defined by the location of the mirrors. The three mirrors together may be considered as effectively defining three sides of an approximately cuboid or rounded cuboid space or volume therebetween. The fourth side being the opening to the aperture of the telescope. The mirrors are oriented relative to each other and to the light transiting the telescope to provide control of wavefront aberrations.

In one embodiment of the first aspect, the mirrors are configured such each surface normal at each mirror surface, formed on reflection of an incident light beam travelling along the optical axis, intersect at an intersection point or zone located within the central optical zone.

The optical path is folded and traverses the common central zone multiple times and in multiple stages. First the light beam passes from the aperture to the primary mirror across the central optical zone, and then between the mirrors, each time passing across the central zone. The folded optical path comprises three reflection steps. In the receive path, first incident light is received at the primary mirror, this light is reflected from the primary mirror to the secondary mirror in a first reflection step, from the secondary mirror to the tertiary mirror in a second reflection step, and finally light received at the tertiary mirror is reflected from there to the focal plane, in a third reflection step. The received incident beam, and each of the three reflected beams traverse the common central zone. The transmit path similarly comprises three reflection stages and the transmit beam passes multiple times across the central optical zone. Advantageously the system has a short track length, this is supported based on the use of at least one freeform mirror. In one exemplary arrangement, the telescope has a total track length of 228 mm, focal length of 489 mm, and an aperture diameter of 124 mm. This is advantageously compact.

In one embodiment of the first aspect, the primary and secondary mirrors of the telescope comprise freeform mirrors, and the tertiary mirror comprises an aspheric mirror.

Arrangements according to embodiments of the invention comprising two freeform mirrors arranged off-axis provide advantages. The primary and secondary mirrors are free from rotational symmetry while the tertiary mirror has an aspheric surface. The secondary freeform mirror compensates for astigmatism induced at the primary mirror.

In one embodiment of the first aspect, the, or each freeform mirror comprises a freeform surface, free from rotational symmetry, and positioned to control the distribution of light in the focal plane, to provide correction of wavefront aberrations across a field of view of the system.

Advantageously, the freeform surfaces are configured to create unique distributions of light in the focal plane, the variance in rotation providing the freeform surfaces with the ability to correct wavefront aberrations across the field of view. Thus the, or each freeform surface is a surface lacking rotational symmetry and is configured to create unique distributions of light in the focal plane.

In one embodiment of the first aspect, the optical terminal system comprises a full field of view of the order of up to 0.4 degrees, where the telescope remains diffraction limited across that field of view.

The telescope supports an optical terminal system having a full field of view of up to 0.4 deg, the arrangement provides advantages in use for locating a laser beam originating from an optical terminal at an optical ground station or on another satellite. It will be appreciated that the system may be configured for use with other fields of view for example with a full field of view of up to 0.3 deg. The telescope according to embodiments of the specification advantageously provides a diffraction limited output across the full field of view.

In one embodiment of the first aspect, the telescope comprising an aperture according to one or more of the following: (i) the telescope comprising an of the order of 100mm to 150mm in diameter; (ii) the telescope comprising an aperture of the order of 124mm in diameter.

The arrangement of the claims advantageously provides a large aperture, in comparison with previous arrangements. The large aperture is supported by use of at least one freeform mirror. The large aperture provides an improved light gathering ability which maximises usable link budget. In a preferred exemplary arrangement, the aperture has a diameter of the order of 124mm. A large collection aperture maximises the usable link budget. A laser beam transmitted from a ground station will diverge over the propagation distance between the ground and the receiver satellite. Thus, the maximum photon collection from the transmitted laser beam depends on the aperture diameter of the receiving in-orbit optical terminal.

In one embodiment of the first aspect, the telescope is configured to control polarisation of light passing therethrough, wherein: the telescope is configured to provide control of the state of polarisation of light across a pupil at the focal plane and provided as input to the optical bench: wherein the incident beam having a first known state of polarisation and the input beam from the telescope to the optical bench has a second known changed state of polarisation.

In one embodiment of the first aspect, the state of polarisation of the input beam to the optical bench is substantially constant across a pupil at the telescope focal plane.

The telescope is configured to provide control of polarisation of light passing through. The polarisation is controlled by the combination of features of the telescope including the arrangement of the mirrors, the orientation of the mirrors relative to the optical path and control of phase delay at the mirror surfaces.

In one embodiment of the first aspect, the mirrors comprise Aluminium or an Aluminium alloy. In one embodiment of the first aspect, one or more of the mirrors comprise a coating arranged according to one of more of the following:

(i) wherein at least one mirror surface comprises a coating;
(ii) wherein all three mirror surfaces comprise a coating;
(ii) wherein the coating comprises: gold;
(iv) wherein the coating comprises bare gold;
(v) wherein the coating is configured to reduce phase delay at mirror surfaces.

In one embodiment of the first aspect, the telescope comprises a telescope housing unit, wherein the housing unit is comprised of (i) a metal material, and wherein the metal comprises Aluminium, or an Aluminium alloy; or (ii) suitable thermally matched lightweight, strong material such as carbon fibre reinforced polymer, CFRP.

Advantageously, the housing and mirrors are formed from materials that are thermally matched. The effects of thermal expansion and contraction in the extreme space environment on optical performance are thus limited.

In one embodiment of the first aspect, the housing unit has a volume of the order of 150x150x150 mm to 250 x 250 x 250mm, and preferably of the order of 200x200x200mm, wherein the mirrors of the telescope are mounted within the housing, in a compact telescope arrangement.

The housing is advantageously compact and lightweight. In exemplary arrangements the unit may be contained in a housing having a volume of the order of between 150x150x150mm and 250x250x250mm, and in a preferred arrangement of the order of 200 x 200 x 200 mm. The system having low mass or of the order of <3kg, and in a preferred arrangement <2.5kg.

In one embodiment of the first aspect, the telescope has an aperture to mass ratio of 40mm/kg to 50mm/kg.

In one embodiment of the first aspect, the telescope comprises a central mechanical axis and each mirror is arranged having a tilted and decentred local coordinate system with respect to the central mechanical axis, and further optionally wherein the central mechanical axis is coincident with the optical axis.

In one embodiment of the first aspect, wherein the telescope is configured to maintain optical performance at different operating temperatures and across a wide operating temperature range, wherein the mirrors are configured such that each surface normal at each mirror surface, at a location of reflection of the incident light beam, travelling along the optical axis, from each mirror, intersects at an intersection point located within the system volume, wherein the intersection point is located approximately equidistant from the surface of each of the three mirrors.

In one embodiment of the first aspect, the intersection point defines a thermal centre of the telescope, wherein the telescope is configured such that thermal expansion of the telescope is controlled about the thermal centre. Thermal expansion is controlled to be symmetric about the thermal centre.

According to a second aspect there is provided an optical terminal system (100) for free space optical communication, FSOC, the optical terminal system configured to operate in different earth orbits, configured for free space satellite optical communications and/or for terrestrial line-of-sight links, the system (100) comprising:

a telescope (200) according to the specification; and
an optical bench (300);
the telescope (200) configured to receive an incident light beam (500) and to focus the light beam to a telescope focal plane (290) as input to the optical bench.

The optical terminal system comprising the telescope according to the specification with compact form factor and an associated optical bench for free space optical communications operating in low earth orbit (LEO) or for terrestrial line-of-sight links advantageously adheres to specifications for Tbps data transfer and preserves polarisation to enable quantum key distribution and polarisation modulation data formats. The optical terminal comprises two subsystems; a front large aperture telescope, and an optical bench. The front reflective telescope is configured to be easily scalable into larger form factors enabling longer link distances such as for use in Geostationary (GEO) applications.

In one embodiment of the second aspect, the optical terminal system is configured to provide control of polarisation of light passing therethrough such that the state of polarisation of the light output is maintained.

The combination of features of the telescope and the optical bench are configured to maintain the state of polarisation of light outputted from the system, relative to the state of polarisation of light received into the system. The telescope is configured to provide control of the state of polarisation passing therethrough, and the optical bench is configured to provide correction, as required, to the state of polarisation of light received from the telescope as input.

In one embodiment of the second aspect, the optical bench comprises at least one field of view, wherein the at least one field of view is a narrow field of view or a wide field of view.

In one embodiment of the second aspect, wherein the system comprises a full field of view of the order of 0.4 degrees.

In one embodiment of the second aspect, the optical terminal system is configured to control polarisation of light passing therethrough, wherein the telescope is configured to provide control of the state of polarisation of light across a pupil at the focal plane and provided as input to the optical bench, and wherein the incident beam having a first known state of polarisation and the input beam from the telescope to the optical bench has a second known changed state of polarisation; wherein the state of polarisation of the input beam to the optical bench is substantially constant across a pupil at the telescope focal plane.

In one embodiment of the second aspect, the optical bench configured to accept light of various states of polarisation within a range of states of polarisation, wherein the telescope is configured to control the second state of polarisation within that range for input at the optical bench; and wherein the optical bench is configured to apply a correction, as required, to the state of polarisation of light received as input from the telescope.

**Brief Description of the Drawings:**

Figure 1 illustrates in block diagram form an optical terminal system according to an exemplary arrangement of an embodiment of the present specification;

Figure 2 is an illustration of a telescope of the optical terminal system of Figure1, showing a perspective view of a telescope and a primary mirror positioned within a telescope unit housing;

Figures 3A and 3B show an exemplary arrangement in which an optical terminal system according to Figure 1 is arranged for interface to a spacecraft. The telescope components of

Figure 3B are located internally in the spacecraft housing, a mirror, in this case a gimbal pointing mirror is shown located at the entrance pupil and external to the spacecraft; Figure 3B shows a perspective view of the primary, secondary and tertiary mirrors of the telescope and their relative positions. The components of the telescope are configured to be housed in a spacecraft body such as shown in Figure 3A;

Figure 4 is a plan view from above of the telescope illustrating the arrangement of the primary, secondary and tertiary mirrors, showing positioning of the mirrors within the telescope and illustrating a beam path through the telescope from an entrance pupil to a focal plane.

Figure 5 is a diagram of a telescope according to an embodiment of the specification showing the path followed by a beam travelling along the optical axis, as it transits through an optical telescope according to an embodiment of the specification.

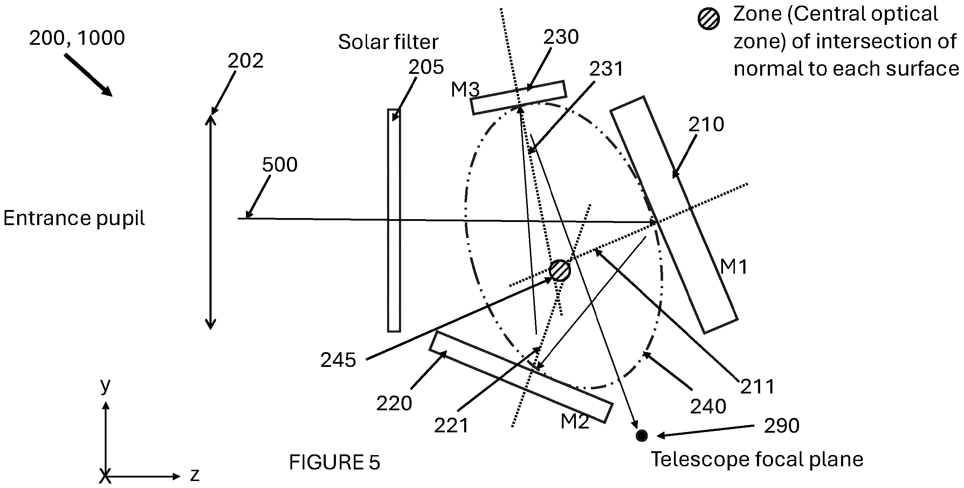

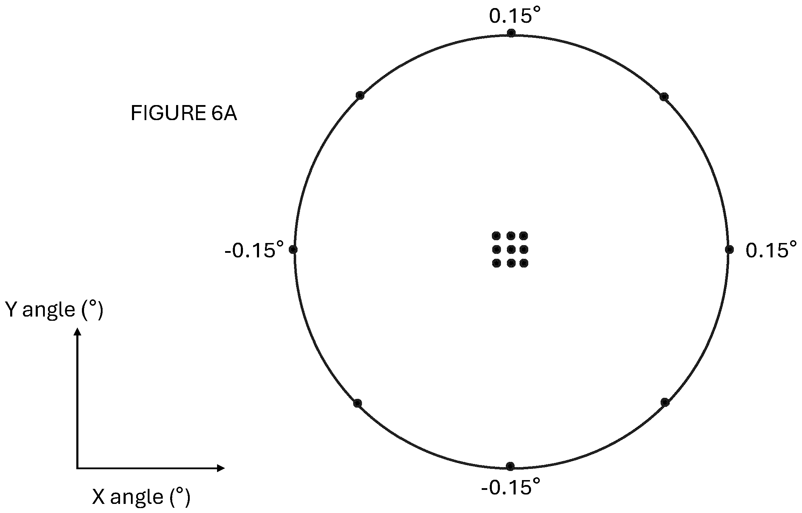

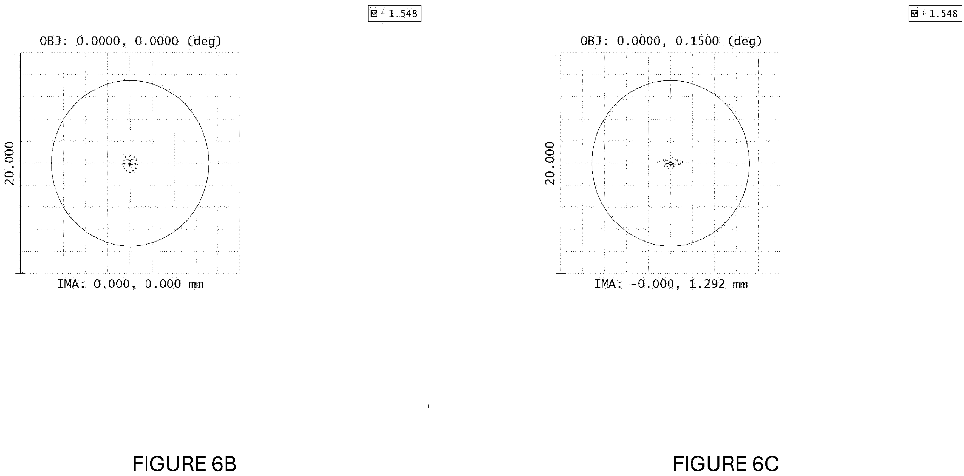

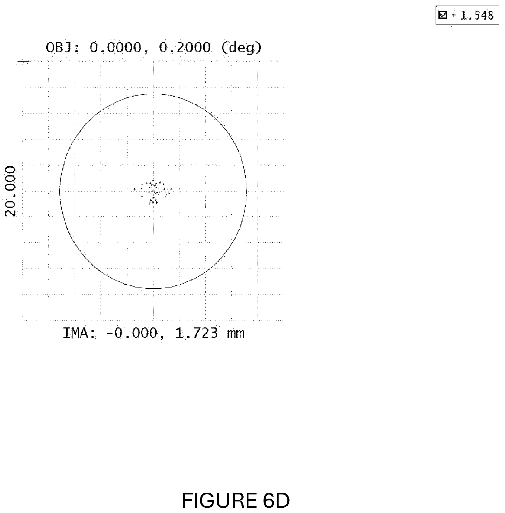

Figures 6A to 6E provide diagrams illustrating the diffraction limited performance of the telescope at a range of field angles across an aperture according to an exemplary arrangement of an embodiment of the present specification. The diagrams show that fields at +/- 0.15 degrees in both x and y support a wide field of view. Further a group of x and y fields extending from +/- 0.007 degrees (or the order of +/- 125 $\mu$rad), illustrate optimisation of the narrow field of view performance. Figures 5B, 5C and 5D show spot sizes at the telescope focus for some example field angles namely field x = 0 degrees (Fig 6B) 0.15 degrees (Fig 6C), 0.2 degrees (Fig 6D). The spot size in each case is located inside the Airy disk showing that the system is diffraction limited. The diagram of Figure 6D shows that the telescope FoV up to 0.4 (+/- 0.2) degrees remains diffraction limited.

Figure 6E shows a diagram of RMS wavefront error as a function of field angle of a telescope of an exemplary arrangement of an embodiment of the specification. The fact that the RMS wavefront error at each field angle is less than the diffraction limit is an indication that the system is diffraction limited.

Figure 7A provides a diagram illustrating polarisation across the pupil for a central field (0,0) degrees and Figure 7B

**EP 4 686 656 A1**

provides a diagram illustrating polarisation across the pupil for an edge case field (0.15, 0) degrees;

Figure 8 shows the schematic layout of an optical terminal system 100 comprising the optical telescope with an exemplary optical bench and configured for free space optical communications. The optical bench is coupled to the telescope and configured for receive and transmit communications.

Figure 9A is a block flow diagram illustrating a receive path of an exemplary optical terminal of an embodiment of the specification.

Figure 9B is a block flow diagram illustrating a receive path of an exemplary optical terminal of an embodiment of the specification.

## Detailed Description:

The present specification relates to an optical terminal system configured for free space optical communications operating in earth orbit and/or for terrestrial line-of-sight links. The system adheres to specifications for Tbps data transfer and preserves polarisation to enable quantum key distribution. The optical terminal system comprises a telescope and an optical bench.

This specification is focussed on embodiments and arrangements of the telescope of the optical terminal system. The telescope is configured for use in space applications having a compact form suitable for space and such applications. It will be appreciated that the telescope may be further configured to be used, including such that it is scalable into larger form factors enabling longer link distances such as for use in Geostationary (GEO) applications.

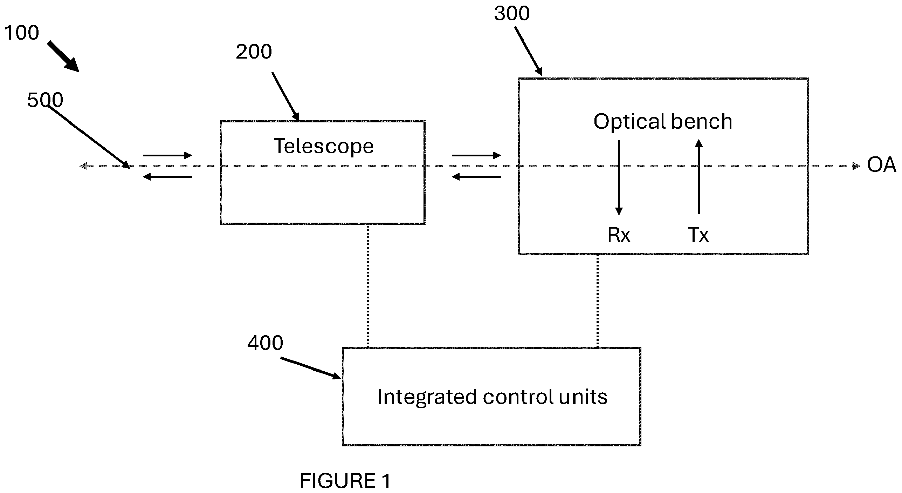

Figure 1 illustrates in block diagram form an optical terminal system 100 according to an exemplary arrangement of an embodiment of the present specification. The optical terminal system 100 is configured for free space optical communication, FSOC, in earth orbit, for example low earth orbit, LEO, and/or for terrestrial line-of-sight links. The system is configured to perform free space optical communications and/or quantum key distribution. While low earth orbit is mentioned as an example application, it will be appreciated that the system may be used in applications involving higher Earth orbits like MEO / GEO and could also involve Lunar orbit or deep space.

The system comprises a telescope 200, an optical bench 300, and integrated control units 400 which provide control to the telescope and optical bench. The optical bench 300 comprises systems for receive and transmit communications including to and from the ground or between terminals in space. As shown, in the block diagram the system 100 supports both receive and transmit paths via the telescope 200 and optical bench 300. The directions of light travel for transmit, Tx, and receive, Rx, paths are shown. The telescope is a large aperture reflective telescope.

In use, the optical bench 300 is coupled to the telescope 200 and in optical communication with the telescope. The optical bench 300 comprises at least one field of view. The field of view may comprise a wide of view or a narrow field of view. In one arrangement, the optical bench 300 supports both a wide field of view and a narrow field of view.

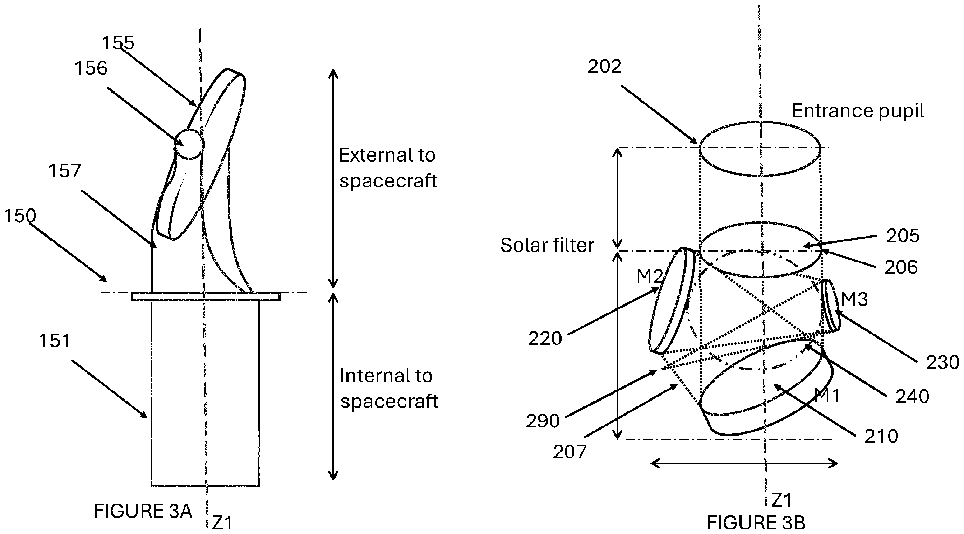

The system 100 is configured to be deployed and to operate in space. The system 100 may be provided in a spacecraft, such as spacecraft 150 of Figure 3B. However, it will be appreciated that the system 100 may be deployed in space crafts of different types.

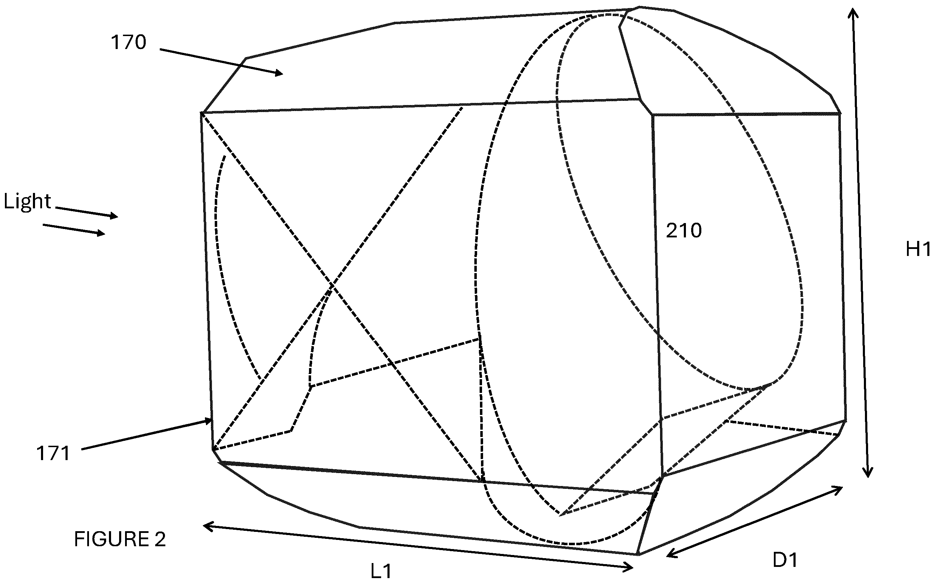

Referring to Figure 2 an exemplary arrangement of an optical terminal 100 having a housing unit 170 according to an embodiment of the invention in outline perspective view is shown. Considering first the mechanical constraint aspects in broad terms, the optical terminal 100 is configured to maximise the telescope aperture while minimising the overall size, volume and mass of the payload. The volume and footprint of the system includes the optical telescope and an integrated optical bench.

The positions of a primary mirror 210 of the telescope and of a front-end portion 171 through which incident light is received by the telescope are shown in outline. The primary mirror 210 is the largest component of the system 100, and as such at least partially defines the volume, size and footprint of the system. In the exemplary arrangement of Figure 2, the primary mirror is positioned at an angle. The housing unit 170 has dimensions of the order of approximately L1, D1 and H1. The exemplary telescope housing unit 170 of Figure 2 has an irregular form. It will be appreciated that housing units 170 of different form may also be provided. The housing unit 170 is essentially designed around the telescope 200, as the single largest component of the optical terminal system and taking account that primary mirror 210 is the largest component of the telescope. Thus, in arrangements of embodiments of the specification the telescope housing unit may have an irregular form taking account of the requirements for positioning the telescope components, and the overall requirement to minimise the size, mass and footprint of the optical terminal system and the telescope.

Figure 3A shows an illustration of a spacecraft 150, the spacecraft having a body 151. An external beam pointing mirror 155 is mounted at mount 156 to the spacecraft body. The beam pointing mirror 155 is located at the entrance pupil plane 203 of the telescope 200. The beam pointing mirror 155 is an optional feature of the optical terminal system 100 and is provided, as required, for particular applications. The optical system 100, telescope 200 and optical bench 300 are configured to be accommodated within the body 151 of the spacecraft 150.

For example, the overall volume of the system 100 may be constrained to allow for it to be assembled within spacecraft 150 or satellite bus housing having dimensions of the order of 150*150*150mmm to 250*250*250mm. In an

6

exemplary arrangement - example 1, the volume is constrained to allow for the system to be assembled within a spacecraft 150 having dimensions of 200 x 200 x 200 mm.

Figure 3B provides an illustration of the telescope 200 of an embodiment of the specification. The telescope 200 comprises three mirrors. The telescope 200 is configured to receive an incident light beam 500 and to focus the light beam to a telescope focal plane 290 as input to the optical bench 300. The telescope comprises three reflectors or in the arrangement shown three mirrors. The telescope comprises a primary mirror 210, a secondary mirror 220; and a tertiary mirror 230. At least one mirror of the three mirrors comprises a freeform mirror having a freeform surface free from rotational symmetry. At least one mirror comprises an aspheric mirror having an aspheric surface, wherein the aspheric surface has rotational symmetry. The tertiary mirror 230 is an even order asphere with terms up to the 10th order. In the exemplary arrangement of Figure 3B, the focal plane 290 is located within the optical bench 300.

Aperture stop 202 is located in front of the primary mirror 210. Aperture stop 202 is configured to coincide with a pointing mirror 155, when provided. The pointing mirror 155 defines entrance aperture 202. The mirror 155 comprises a planar gimbal mirror 155, provided for coarse pointing of the terminal 100. A solar filter 205 is provided between the entrance aperture 202 and the primary mirror 210.

The telescope 200 comprises an off-axis telescope. Each of the three mirrors is configured as an off-axis mirror. The mirrors are arranged such that rotational symmetry about a central mechanical coordinate axis is broken. In Figures 3A and 3B the central mechanical axis is shown as Z1, a longitudinal axis extending through the system.

In brief some of the key special technical features of the telescope are as follows:
The telescope comprises a three-mirror folded optical path. The telescope is an off-axis telescope. The telescope comprises a freeform reflective telescope. Further the telescope comprises a large aperture. These features are described further below with reference to the drawings.

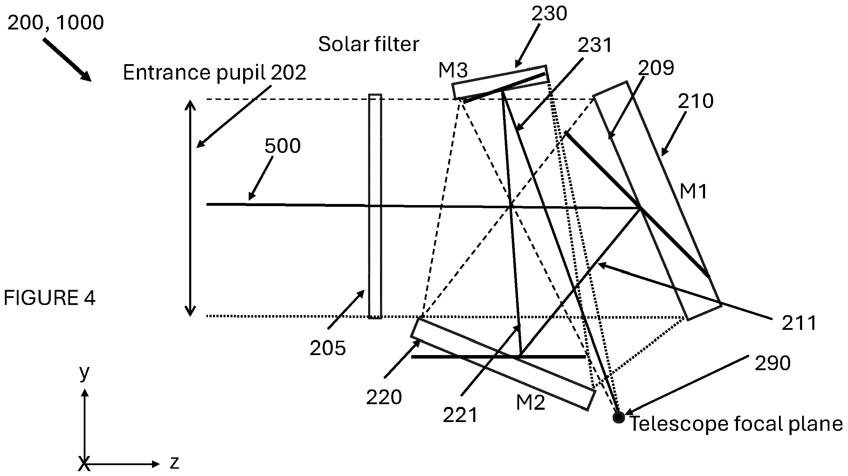

Referring to Figure 3B and Figure 4, the three-mirror folded optical path is defined by the mirrors 210, 220, 230 which are strategically arranged off-axis around a central optical zone 240. The optical zone 240 may be described as being centrally located between the mirrors 210, 220, 230, the front opening portion 206, and an optical bench interface portion 207 near the focal plane 290 of the telescope. The configuration of the telescope optical path supports the compact form of the telescope. Each of the three mirrors 210, 220, 230 is arranged such that it has a tilted and decentered local coordinate system with respect to the central mechanical axis of the telescope. The folded optical path defines a number of beam path sections for example a first being beam path section BP1 the path followed by the incident beam through the telescope to the primary mirror, the second BP2 being that between the primary and second mirror, the third BP3 being that between the secondary and tertiary mirror and the fourth BP4 being between the tertiary mirror and the focal plane. The light beam is reflected from each mirror surface. The light beam as it traverses via each section BP1-BP4 of the folded optical path traverses the central optical zone.

To maximise the effectiveness of the terminal, a fast optical system capable of high percentage power transmission and operation in the extreme space environment is required. The invention provides a fast optical system having a small f-number, which is supported by providing a reduction in the focal length of a system while preserving a large entrance aperture to gather lots of light.

The track length of the telescope may be of the order of 210 to 250mm. The track length being the physical length or size of the telescope (or the size of the package). It will be appreciated that the telescope also has focal length. In an exemplary arrangement according to an embodiment - the telescope has a total track length of 228 mm, a focal length of 489 mm and aperture diameter of 124 mm. In the exemplary arrangement - example 1, the aperture stop is located 250mm in front of the primary mirror 210.

In arrangements according to the specification the telescope advantageously has a mass in the range of 2.5kg to 3kg and an aperture to mass ratio in the range of 40mm/kg to 50mm/kg.

The specification thus provides a three-mirror telescope having at least one freeform mirror and at least one aspheric mirror, arranged to provide an off-axis folded optical path.

With reference to Figure 4, in a preferred arrangement, the primary 210 and secondary mirrors 220 each comprise a freeform mirror, and the tertiary mirror 230 comprises an aspheric mirror. The provision within the telescope 200 of the tertiary mirror comprising an aspheric surface which has rotational symmetry, simplifies the system to aid in optical assembly integration and test of the telescope unit.

The, or each freeform mirror of the telescope is configured to control the distribution of light in the focal plane 290 to provide correction of wavefront aberrations across a field of view of the system 100. Each freeform mirror comprises a freeform surface that is free from rotational symmetry. The freeform surfaces are also described as surfaces lacking rotational symmetry. In the system of the invention the freeform surfaces are configured to create unique distributions of light in the focal plane. In the telescope the, or each freeform mirror is positioned to provide control of the distribution of light in the focal plane, and to provide correction of wavefront aberrations across a field of view of the system. The variance in rotation provides the freeform surfaces with the ability to correct wavefront aberrations across the field of view.

In the arrangement having two freeform mirrors and one aspheric, each of the three mirrors 210, 220, 230 is arranged such that it has a tilted and decentered local coordinate system with respect to the central mechanical axis of the telescope. The primary and secondary mirrors are freeform mirrors free from rotational symmetry while the tertiary mirror has an aspheric surface. Tilting and decentring the optical surfaces, where the base shape is spherical, inherently gives rise to astigmatism due to the variation in optical power between the plane about which the mirror is tilted and the un-tilted plane. In the telescope 200, the primary mirror 210 is configured to provide a field dependent aberration correction due to the position of the aperture stop 202. The secondary mirror 220 is configured to compensate for the large astigmatism induced in the primary mirror 210.

Wavefront aberrations arise because of differences in the optical path length of rays as they pass through a system of reflecting and/or refracting elements, leading to degradation in the imaging quality of an optical system. In free space optical communications, this leads to an increase in size and distortion of the optical point spread function, reducing coupling efficiency into optical fibres in the receive channel, for example. Polarisation aberrations are variations in the phase, amplitude, and polarisation state of the electromagnetic field across a pupil of interest.

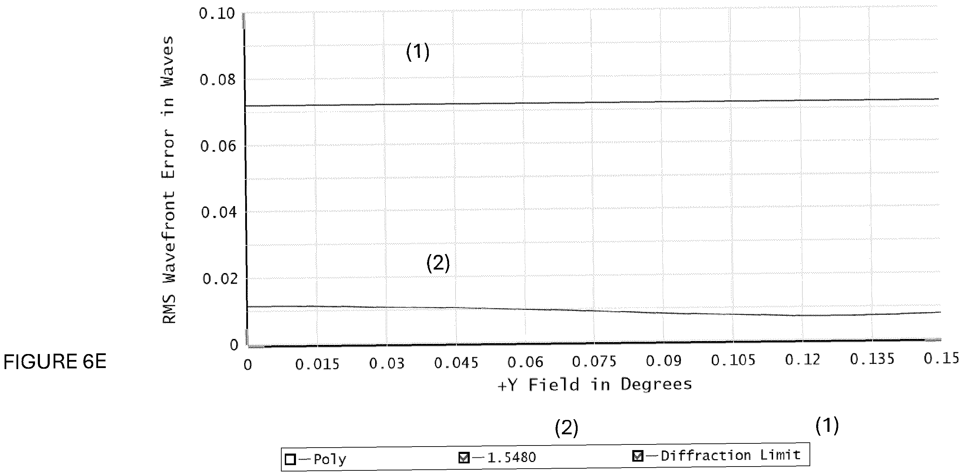

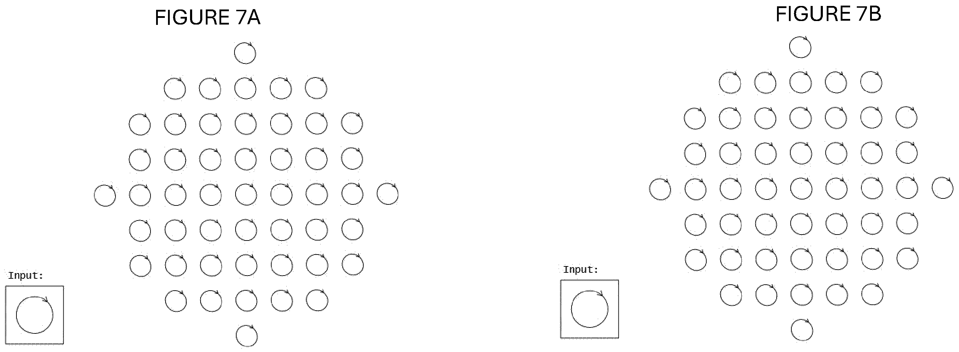

In the telescope 200 according to embodiments of the specification the telescope system has been configured to limit wavefront aberrations in the optical terminal. This control of aberrations to provide a diffraction limited output is described further with reference to Figures 6. The telescope has also been configured to provide control of polarisation and control of polarisation aberrations. The control of polarisation is described further with reference to Figure 7. Thus, the telescope 200 and the optical terminal system 100 are configured for use for applications such as quantum key distribution.

An approach to reduce aberrations in a rotationally symmetric system is to increase the optical path length. However, in contrast in the present arrangement, including at least one freeform surface. It is this variance in rotation that confers freeform surfaces with the ability to correct aberrations across the field of view that are typical of unobscured optical systems based upon reflectors or mirrors.

Further, a three-mirror system such as in the telescope 200 is configured to provide sufficient degrees of freedom to minimise wavefront aberrations across the field, while also minimising the number of surfaces to limit cost and volume. Thus, the use of freeform surfaces in the exemplary telescope according to embodiments of the specification offer a good compromise between performance and complexity. The trade-off is that the optical system configuration and manufacture is highly complex, as the well-understood rules for symmetric systems can no longer be applied.

The telescope 200 is a high precision optical telescope, in which the optical elements are specially configured and arranged to provide a diffraction limited performance across narrow and wide fields of view.

As described above, the telescope comprises a folded optical path and the mirrors are arranged off-axis within the telescope. The telescope comprises at least one freeform mirror and at least one aspheric mirror, and in a preferred arrangement comprises two freeform mirrors and an aspheric mirror. The combination of features provides a telescope that is compact, and which is configured to control wavefront aberrations and polarisation. The telescope is further configured in the arrangement of the optical elements, the mirrors, and the overall form to provide a thermally stable optical system.

Referring to Figure 5, the mirrors 210, 220 and 230 and the overall body of telescope 200 comprise materials which are used in the configuration and manufacture to provide a thermally stable optical system. The telescope 200 and mirrors 210, 220 and 230 are configured to provide a thermally stable optical system through matching of coefficients of thermal expansion between optical and mechanical materials used. The telescope and mirrors 210, 220 and 230 are thus configured to provide an increased survivability of the terminal 100 in space. The arrangement of the telescope provides reduced or limited material expansion and contraction difference between the telescope and the opto-mechanical mounting structures. Further, the optical elements are configured to limit thermal stresses, and to avoid thermally induced misalignments. The optical elements and the telescope are thus configured to maintain wavefront quality by avoiding thermally induced misalignments that could cause a deterioration in the wavefront quality.

The surface normal 211, 221 and 231 at each reflector 210, 220, 230 at the point where the ray travelling along the optical axis strikes it is shown in the illustration of Figure 5. The telescope and mirrors are arranged such that the normal vectors 211, 221 and 231 are configured to align and intersect at an area 245 in a centre of the assembly in such a way that provides for improved thermal expansion performance of the telescope. The central intersection area 245 also referred to or as intersection point 245 is a similar distance from each mirror. This arrangement provides for symmetrical thermal expansion / contraction of the assembly. The thermal expansion/contraction being controlled about a common central point.

The central area in which the surface normals intersect defines a thermal centre region within the system volume. In the specification this area is defined as a thermal centre 245 of the optical system of the telescope. This thermal centre 245 is configured to be located approximately equidistant from each mirror surface. Thermal expansion of the telescope system is thus well controlled about this thermal centre 245. The telescope and mirrors are configured such that thermal expansion is controlled and constrained to be symmetric for all three telescope mirrors. The telescope 200 and the mirrors 210, 220 and 230 are configured by thermo-optical and mechanical processing such that thermally-induced optical aberrations arising from the thermal gradient of the telescope are controlled and minimized. The system is configured to take account of and to address aberrations that may arise due to changes in the thermal environment in which the telescope is configured to be used.

The telescope comprises thermally stable mirror substrates. Further, the pointing assembly of the optical terminal system and optical bench is configured to be thermally stable. The thermally stable components, advantageously further supports a reduction in pointing errors that could be caused by the extreme temperature swings of space.

Solar light is reflected to reduce heating effects in the mirror substrates. The system is configured to maintain polarisation of light passing therethrough.

In an exemplary arrangement according to the specification the mirror substrates are comprised of a metal material. For example, the mirror substrates may be comprised of Aluminium or an Aluminium alloy. The mirrors comprise a polished layer laid on a base substrate.

In an exemplary arrangement, the housing unit is comprised of a metal material. The metal material may comprise Aluminium. In an alternative arrangement the housing may comprise a suitable thermally matched lightweight, strong material such as carbon fibre reinforced polymer (CFRP).

The materials of the housing unit and mirrors have been selected to decrease density and thermal expansion while increasing specific stiffness. The coefficients of thermal expansion, CTE, of the materials of the various components are matched to provide an increased uniformity of expansion and to reduce the risk of aberrations.

One or more of the three telescope reflectors (mirror) may comprise a coating 209. The coating 209 may comprise gold. The coating 209 in a preferred arrangement comprises a bare gold coating. The coating is configured to provides high reflection in the wavelength band, having a range of 1530 to 1565 nm, which is typically used in free space optical communications.

The solar filter 205 is further configured to provide thermal control within the telescope and the optical terminal system. The solar filter 205 is configured to prevent hearing of the telescope and to assist in avoiding aberrations. The solar filter 205 comprises a solar rejection filter that is configured to reflect out of C-band solar light that could cause direct heating of the mirrors when it enters the aperture. Because the light is reflected, it never reaches the mirror substrates where it could be absorbed and cause heating by conduction.

The telescope comprises a central mechanical axis and wherein each mirror is arranged having a tilted and decentred local coordinate system with respect to the central mechanical axis, and further optionally wherein the central mechanical axis is coincident with the optical axis.

The telescope is configured to maintain optical performance at different operating temperatures and across a wide operating temperature range,
wherein the mirrors are configured such that each surface normal at each mirror surface, at a location where incident light travelling along the optical axis reflects from each mirror, and intersects at an intersection point located within the system volume, wherein the intersection point is located approximately equidistant from the surface of each of the three mirrors.

The intersection point defines a thermal centre of the telescope, the telescope is configured such that thermal expansion of the telescope is controlled about the thermal centre. Thermal expansion is controlled to be symmetric about the thermal centre.

One of the aims in the arrangement and in the selection of material used for manufacture of the system is to reduce the thermal expansion of the telescope and opto-mechanical structures, which lead to thermally induced misalignments deteriorating the wavefront quality.

The telescope comprises a telescope housing unit, the housing unit providing a support structure for supporting the mirrors at the required positions. As discussed above the angles and positions of the mirrors are highly precise. In one arrangement the telescope housing unit provides a support having at least a base portion, a top portion and four sides. One side is open to the telescope aperture, and wherein three sides comprise three mirror support side walls each configured to receive a mirror of the telescope. The telescope unit housing in one exemplary arrangement has a generally cuboid form, however, it will be appreciated that housing of different form may also be provided for example the housing may include a wall or side between any of the four sides or between one or more of the sides and the top and base portions. The basic form of the support is defined by the constraints of size and volume for space applications, and further by the form of the primary mirror which is the largest component of the telescope. In addition, the form is configured to provide positioning of the mirrors as required for optical performance. The optical terminal system further comprises an external housing defining an external surface of the housing and an internal space, wherein the telescope housing unit is receivable within the internal space.

The telescope unit housing may comprise a single piece housing. The housing unit may be formed in a high precision process. The housing unit may be formed having locators for receiving the mirrors. The housing unit or body of the telescope and the mirrors are configured to provide a thermally stable optical system through matching of coefficients of thermal expansion between optical and mechanical materials used. Further, the optical terminal system and telescope are configured, including by the materials used, to provide an arrangement that is brought to thermal equilibrium throughout the structural components rapidly, when changes of temperature occur. Temperature changes include the changes in temperature of the environment of the system and telescope. Thermal expansion is controlled to be symmetric by configured.

This thermal centre location is approximately equidistant from each mirror surface. Thermal expansion of the telescope system is therefore well controlled about this thermal centre, as it happens in a symmetric fashion for all three telescope mirrors. A custom thermo-optical/mechanical process has been developed and refined to characterise and minimise thermally-induced optical aberrations arising from the thermal gradient of the telescope. Materials selected for the manufacture of the telescope are chosen to provide an athermalised system to increase the robustness and lifetime of the arrangement by reducing susceptibility to material expansion and contraction difference between the telescope and the opto-mechanical mounting structures, including structures that provide altitude and azimuth control of telescope gross pointing. Thermal stresses on optical elements that may arise are limited, avoiding thermally induced misalignments which cause a deterioration in the wavefront quality.

Athermalization, being the process of achieving optothermal stability in optomechanical systems

Figures 6A to 6E provide diagrams illustrating the diffraction limited performance of a telescope according to an exemplary arrangement of an embodiment of the present specification at a range of field angles across an aperture. In the diagrams the design field angles relate to performance of the telescope across an aperture. The diagrams show the spot size at the telescope focus for some design field angles. The spot size in each case is smaller than the Airy disk which shows that the system is diffraction limited.

Figure 6A shows that fields at +/- 0.15 degrees in both x and y support a wide field of view. Further a group of x and y fields extending from +/- 0.007 degrees illustrate optimisation of the narrow field of view performance. In the system 100, the design FoV of the exemplary arrangement is +/- 0.15 degrees = 0.3 degrees.

This FoV further corresponds with suitable WFOV sensors. However, as shown below with reference to Figure 6B to 6D, the telescope 100 is diffraction limited at up to +/- 0.2 degrees = 0.4 degrees. The FoV is selected to accommodate a known amount of uncertainty in the cone of light entering the aperture and ensure robust acquisition of a link for FSOC. Essentially, in use, there is a two-step process: 1) the terminal searches in space for the cone of light coming from another terminal by doing a spiral scan in space. If the FoV is large, it's easier to detect that incoming cone of light. 2) once light is detected, the system 100 is configured to control beam pointing and the beam divergence is reduced so that data transfer can happen. The field angles provided take account of a maximum uncertainty in position and orientation that the telescope would need to be able to handle when searching for a beacon coming from a sister terminal.

The FoV of the telescope is related to the pointing acquisition and tracking, PAT, requirements for the optical terminal system and is selected in accordance with requirements for data transfer over distances of the order of 45,000 km. This is applicable for example to optical links from ground to LEO, and intersatellite links from low earth orbit, LEO to geostationary orbit, GEO.

Figures 6B, 6C and 6D show spot sizes at the telescope focus for some example field angles, namely field (x,y) = (0,0) degrees (Fig 6B) (x,y) = (0,0.15) degrees (Fig 6C), and (x,y) = (0,0.2) degrees (Fig 6D). The spot size gets bigger going through from y = 0, to 0.15, and to 0.2 degrees but remains inside the Airy disk. That the spot size in each case is located inside the Airy disk further shows that the system is diffraction limited at these field angles. The diagram of Figure 6D shows that a telescope field of view, FoV, of up to 0.4 (+/- 0.2) degrees remains diffraction limited.

Figure 6E shows a diagram of root mean square, RMS, wavefront error as a function of field angle of a telescope 200 of an exemplary arrangement of an embodiment of the specification. The fact that the RMS wavefront error at each field angle is less than the diffraction limit is an indication that the system is diffraction limited.

Figure 7A provides a diagram illustrating polarisation across the pupil for a central field (x,y) = (0,0) degrees and Figure 7B provides a diagram illustrating polarisation across the pupil for an edge case field (x,y) = (0.15, 0) degrees. These figures allow a comparison of polarisation across the pupil for the central field (0,0) degrees (Figure 7A) with one of the edge case fields (0.15, 0) degrees (Figure 7B). As described above the telescope is configured to control polarisation. The diagrams show that there is no change in polarisation performance between the focus from central field to edge field. The telescope 200 is configured to control polarisation such that a change in state of polarisation of light passing through the telescope is constant across the pupil at the telescope focus.

Retardance of the telescope is maintained at <5%. Transmission through the telescope is 98.22% (of intensity).

Retardance is the difference in optical phase shift between two orthogonal polarisations, usually the s and p polarisations. Retardance is introduced on reflection of light from surfaces at non-normal angles of incidence such as from freeform surfaces.

To explain further, it will be appreciated that in a system with no polarisation effects all outputs over the pupil would be identical to the input. The telescope 200 is configured to control polarisation . The input beam has a first known polarisation. In the example of Figures 7A and 7B this is circular. The telescope is configured to control polarisation such that the output beam, from the telescope, has a second known polarisation. Referring to Figure 7B, the orientation angle of the major axis of the polarisation ellipse, of the second known polarisation, is different from that of the input beam, and in the example shown, the second polarisation at each pupil location is elliptical.

The telescope 100 is configured to provide a low light loss through the system while preserving polarisation, with T=98.22 %. The combination of features which provide control of polarisation include the arrangement of the three-mirror folded optical path, including the angles at which the mirrors are arranged. Further the mirrors comprise a coating 209. The coating may comprise gold or bare gold. The coating is provided to reduce or avoid phase delay at the mirror surfaces.

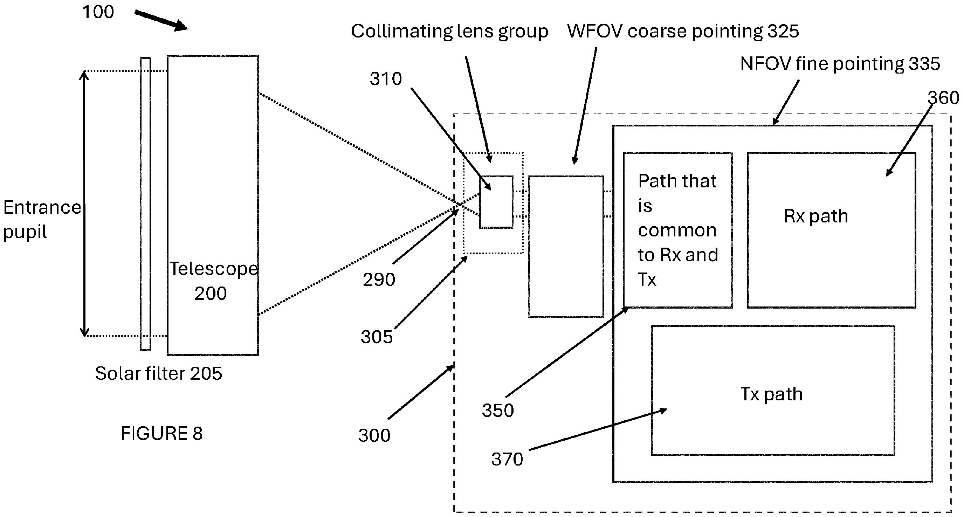

Figure 8 provides a block diagram of an optical terminal system 100 according to an embodiment of the specification. The telescope 200 is shown coupled to optical bench 300 and in optical communication with the optical bench. The system 100 comprising: a telescope 200 and an optical bench 300. The telescope 200 configured to receive an incident light beam 500 and to focus the light beam to a telescope focal plane 290 as input to the optical bench. The telescope comprising: a primary mirror 210; a secondary mirror 220; and a tertiary mirror 230. At least one mirror comprising a freeform mirror configured to control the distribution of light in the focal plane 290 to provide correction of wavefront aberrations across a field of view of the system 100.

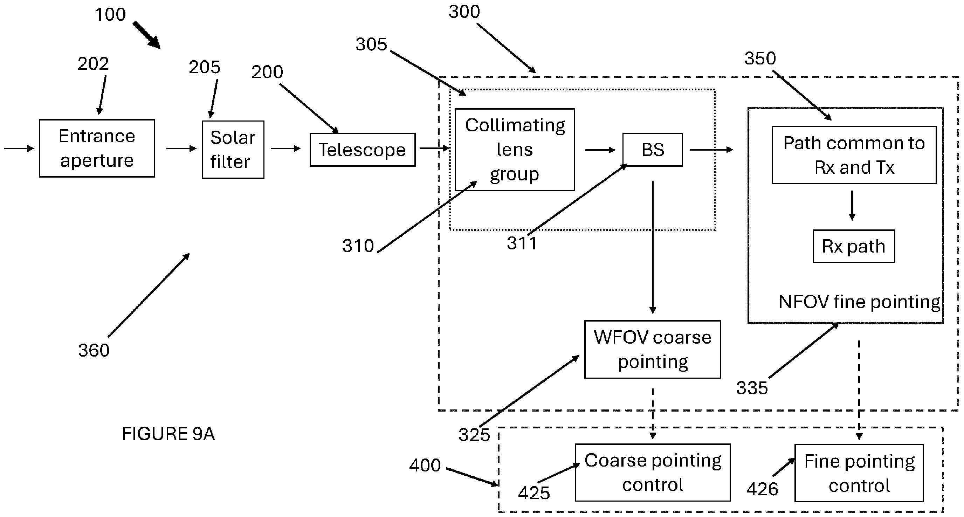

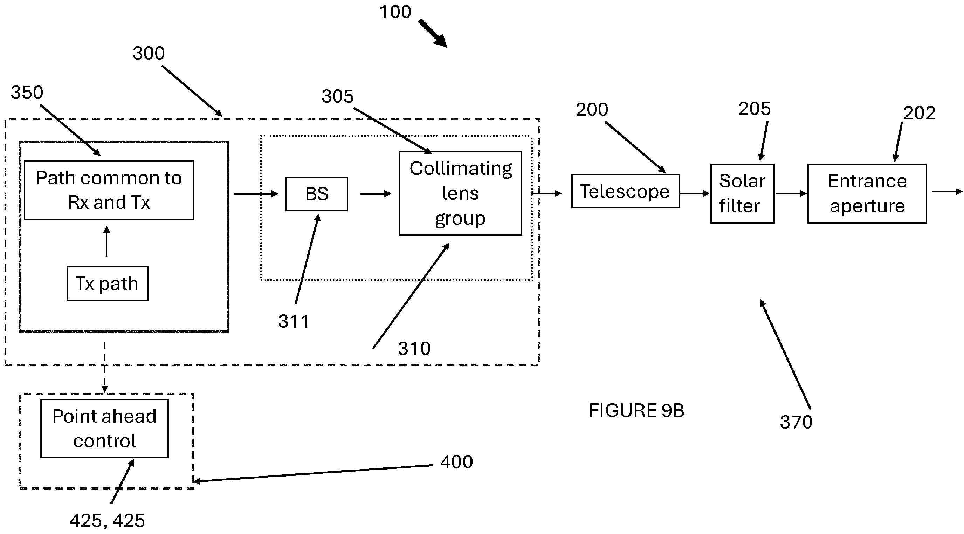

The optical bench comprises a telescope to optical bench optical interface 305. In exemplary arrangement of Figures 8 and 9A and 9B the optical interface comprises a collimating lens group 310. The optical interface may further comprise a beam splitter 311. The optical bench 300 comprises a first wide field of view 325 and a second narrow field of view 335. The focal plane 290 of the telescope is located within the optical bench. The telescope 200 transmits incident light to the focal plane 290 as an input to the optical bench. The optical bench is configured to provide the input to the first and/or second fields of view of the optical bench.

The optical bench 300 is configured to provide a wide field of view coarse pointing 325 and a narrow field of view fine pointing 335. The optical bench comprises a path 350 that is common to both the receive and transmit paths. The optical bench 300 further comprises a receive path 360 and a transmit path 370.

The optical bench comprises a wide field of view relay lens system configured for locating a laser beam originating from an optical ground station and for coarse pointing assembly. In addition, the system 100 further comprises a narrow field of view NFOV relay lens system that utilises of the order of 250 $\mu$rad for guiding fine adjustments of the optical system 100 to allow the optical terminal to lock-on to a ground station beacon GSB. When the optical terminal is locked-on, data transfer via uplink, downlink or intersatellite link can commence.

The optical terminal system 100 is configured to provide control of polarisation of light passing therethrough such that the state of polarisation of the light output is maintained. The combination of features of the telescope 200 and the optical bench 300 are configured to maintain the state of polarisation of light outputted from the system 100, relative to the state of polarisation of light received into the system. The telescope is configured to provide control of the state of polarisation passing therethrough, and the optical bench is configured to provide correction, as required, to the state of polarisation of light received from the telescope as input.

Within the optical terminal system 100, the telescope 200 is configured to provide control of the state of polarisation of light across a pupil at the focal plane and provided as input to the optical bench 300, wherein the incident beam having a first known state of polarisation and the input beam from the telescope to the optical bench has a second known changed state of polarisation. As described above, the state of polarisation of the input beam to the optical bench 300 is substantially constant across a pupil at the telescope focal plane. Further, the state of polarisation is configured to be constant across the telescope field of view. The optical bench 300 is configured to accept light of various states of polarisation within a range of states of polarisation. The telescope 200 is configured to control the second state of polarisation within that range for input at the optical bench. The optical bench 300 is configured to apply a correction, as required, to the state of polarisation of light received as input from the telescope 200.

The telescope 100 is configured to provide a low light loss through the system while preserving polarisation T=98.22 %. The combination of features which provide control of polarisation include the arrangement of the three-mirror folded optical path, including the angles at which the mirrors are arranged. Further the mirrors comprise a coating 209. The coating may comprise gold or bare gold. The coating is provided to reduce or avoid phase delay at the mirror surfaces.

The terminal system 100, and the telescope 200 and optical bench 300 support both receive and transmit paths of light of the optical communication.

Referring to Figure 9A an exemplary arrangement of a receive path of the system according to an embodiment of the specification is shown. The telescope 200 comprising aperture is configured to gather light transmitted from a sister terminal located on the ground or in orbit and to provide to the optical bench as input. An incident light beam received by the telescope 200 is transmitted to the optical bench 300 as a received input beam. The optical bench further comprises a beam splitter element 311 configured to provide input to the wide field of view 325 for course pointing control and/or the narrow field of view 335, for fine pointing control.

The wide field of view lens relay system is coupled to a course pointing control 425 and the narrow field of view lens relay system is coupled to a fine pointing control 426.

Referring to Figure 9B an exemplary arrangement of a transmit path of the system according to an embodiment of the specification is shown. Light is transmitted from the optical terminal 100 to a sister terminal located on the ground or in orbit. With application of a point ahead control a transmit path is provided from the optical bench via the telescope.

Taking account of Figures 9A and 9B, the system 100 according to an exemplary arrangement of an embodiment of the specification thus supports methods of control of optical communication including as follows. A general front end comprising a telescope 200, 1000 is configured to gather light transmitted from / transmit light to a sister terminal located on the ground or in orbit. The telescope 200 uses freeform surfaces to minimise wavefront aberrations in a significantly reduced volume compared to conventional optics. The freeform surfaces comprise low error mirrors which advantageously support use of the system 100 for fibre coupling in optical inter satellite links. The telescope 200 is configured to be used with optical benches 300 of different types, depending on the intended application and use. Control may be provided at an interface between the telescope and the optical bench. The collimating lens group 310 is used to control magnification or demagnification of the light that enters the telescope 200 to the optical bench 300 and vice versa. The optical terminal 100 is configured to operate in both receive and transmit mode across the communications C-band. The receive and transmit channels may be differentiated by their wavelength bands. In the embodiment described here, the separation between transmit and receive wavelength bands is of the order of up to 5 nm.

EXAMPLE 1 - exemplary telescope 1000 according to an embodiment of the invention of the specification is described below.

Optical telescope 1000 comprises primary and secondary mirrors each comprising freeform surfaces along with an aspheric tertiary mirror. The freeform surfaces are configured for aberration balancing. The aspheric tertiary mirror has rotational symmetry and is configured to simplify the telescope system including to aid in optical assembly integration and test of the telescope unit.

Telescope 1000 comprises a diffraction-limited telescope that advantageously is configured to fit into a small volume, for example of the order 200 x 200 x 200 mm. Telescope 1000 comprises a low mass for example of the order of <2.5 to 3kg, and a large aperture of the order of 124 mm in diameter. The telescope 1000 comprises a three-mirror folded off-axis non obstructed telescope. The telescope 1000 comprising the parameters of size, footprint and mass as described is configured advantageously for a system that must launch into space aboard a satellite. Thus, the aperture to mass ratio of the telescope is in the range of 40mm/kg to 50mm/kg. The optical terminal system comprising the telescope is configured having a max antenna gain of the order of 108dB

The telescope 1000 defines a general front end comprising a telescope of aperture 124 mm, F# 3.9, and volume 200 x 200 x 200 mm, for use in optical terminal 100 configured to gather light transmitted from / transmit light to a sister terminal located on the ground or in orbit.

The telescope 1000 comprises a total track length of 228 mm, a focal length of 489 mm and aperture diameter of 124 mm. In the exemplary arrangement - example 1, the aperture stop is located 250mm in front of the primary mirror 210.

The three telescope mirrors are coated with bare gold, configured to provide high reflection in the wavelength band, 1530 *to* 1565 nm, which is typically used in free space optical communications. The telescope has transmission > 98%. The field of view of the telescope is a product of the pointing acquisition and tracking (PAT) requirements for the full terminal system and satisfies the requirements for data transfer over 45,000 km. This envelopes optical links from ground to LEO, and intersatellite links from LEO to GEO.

Details of exemplary parameters of an optical terminal system 100 and telescope 1000 are set out in table 1 below.

| Large FoV | 0.23° / 250μrad | WFoV for tracking / NFoV for tracking |
|---|---|---|
| Wavelength | | 870 nm / 1550 nm |
| Field of View (full field) | | 0.23 degrees |
| Entrance pupil diameter | | 124 mm |
| Focal length | 489 mm | |
| F# | 3.9 | |
| Magnification (from optical bench to sky) | x15.5 | |
| Operating temperature | 20 +/- 3 °C | |
| Maximum optical system design volume | 200 mm x 200 mm x 200 mm | |
| Table 1. Example 1 - Telescope parameters. | | |

The optical terminal system comprising the telescope and the optical bench is configured to preserve polarisation in transmit and receive modes along the narrow field of view relay system to within 4% error at the detector plane. The telescope is configured, as described above, to control polarisation. The optical bench is configured to control and to correct polarisation.

Solar filter 205 is configured to reduce the variation in thermally induced optical surface distortions of the mirrors.

The system is thermally stable over a 30° C temperature range. The use of space-qualified materials allows for the optical system to operate over an increased temperature range.

The dimensions and parameters are representative of a preferred arrangement, it will be appreciated however that the usual margin of error will apply to measurements, dimensions and parameters. Further, other arrangements having different dimensions may also be provided within the scope of the specification.

Advantages of the arrangement of the telescope 200 and 1000 according to the specification include the following:

Large aperture

A large aperture for example an aperture of 124 mm, has a > x2 light collection ability compared to other previous systems

The large optical aperture diameter is achieved in a low mass arrangement, which is advantageous for launch.

The large optical aperture diameter is additionally achieved in a small volume, which is also advantageous for launch.

The diagram of Figure 6D shows that a telescope field of view, FoV, of up to 0.4 (+/- 0.2) degrees remains diffraction limited.

Taking account of the above descriptions and teaching, according to an embodiment of the invention there is provided exemplary arrangement of a diffraction-limited telescope 200, 1000. The telescope is configured that fits into a small volume for example 200 x 200 x 200 mm. The telescope has a low mass for example of the order of less <2.5kg to 3kg, and large aperture 124 mm diameter. The telescope has a total track length of 228 mm, a focal length of 489 mm and an aperture diameter of the order of 124 mm. In the exemplary arrangement - example 1, the aperture stop is located 250mm in front of the primary mirror 210. The large field of view of the system is of the order of 0.23° wide field of view for tracking/ 250 $\mu$rad narrow field of view for tracking. However, arrangements may be provided having a field of view of up to 0.4.

The light gathering ability of any telescope scales with the area of the aperture. The large unobscured aperture of this telescope, at 124 mm, has a > x2 light collection ability compared to other previous or current systems. The large optical aperture diameter is achieved in a low mass arrangement, which is advantageous for launch. The large optical aperture diameter is additionally achieved in a small volume, which is also advantageous for launch.

The large field of view of the telescope, for example at 0.23°, facilitates robust signal acquisition, thereby reducing the pointing precision required for the satellite bus.

The collecting aperture is large, so can locate a signal that may be very divergent coming from another terminal. In space, large thermal swings can occur, leading to heating of telescope mirrors, and resulting in misalignment of optics and reduced performance. In this invention, the mirror arrangement and substrate materials have been carefully chosen to mitigate this effect. A custom solar rejection filter reflects out of C-band solar light that could also cause direct heating of the mirrors when it enters the aperture. Because the light is reflected, it never reaches the mirror substrates where it would be absorbed and cause heating by conduction.

The optical terminal 100 advantageously provides improved communication as follows:
Improved light gathering due to the large aperture. This is done in a low mass, small volume footprint. In transmit, the beam divergence of the beacon is 0.23° full-angle. In transmit, the beam divergence of the communications beam is 250 $\mu$rad full-angle. Thermally stable mirror substrates and pointing assembly reduce pointing errors that could be caused by the extreme temperature swings of space. Solar light is reflected to reduce heating effects in the mirror substrates. The system is configured to maintain polarisation of light passing therethrough.

The problems addressed by the telescope 200, 1000 and the optical terminal 100 comprising the telescope include the following:
Wavefront aberrations arise because of differences in the optical path length of rays as they pass through a system of reflecting and/or refracting elements, leading to degradation in the imaging quality of an optical system. In free space optical communications, this leads to an increase in size and distortion of the optical point spread function, reducing coupling efficiency into optical fibres in the receive channel, for example. Polarisation aberrations are variations in the phase, amplitude, and polarisation state of the electromagnetic field across a pupil of interest. In the invention described here, careful optical design was done to minimise wavefront aberrations in the optical terminal as a first critical step. This was followed by consideration of polarisation aberrations and their reduction, so that the optical terminal 100 could additionally be used for particular applications such as quantum key distribution.

Rotationally symmetric systems strive to reduce aberrations by increasing the optical path length. As discussed above, this is impractical for a number of reasons for space-based applications. A freeform surface is a surface lacking rotational symmetry and with the power to create unique distributions of light in the focal plane. It is this variance in rotation that confers freeform surfaces with the ability to correct aberrations across the field of view that are typical of unobscured optical systems based upon reflectors. Three mirror systems offer sufficient degrees of freedom to minimise wavefront aberrations across the field, while also minimising the number of surfaces to limit cost and volume. Freeform surfaces offer a good compromise between performance and complexity. The trade-off is that the optical design is more involved, as the usual well-understood rules for symmetric systems no longer apply.

In this optical terminal telescope, primary and secondary mirrors were designed as freeform surfaces for aberration balancing, along with an aspheric tertiary mirror. This last mirror has rotational symmetry, which simplifies the system to aid in optical assembly integration and test of the telescope unit. The design produces a diffraction-limited telescope that fits into a small volume (200 x 200 x 200 mm), has low mass (<3 kg), and large aperture (124 mm) - all highly desirable qualities for a system that must launch into space aboard a satellite.

The three telescope reflectors are coated with bare gold, chosen specifically for high reflection in the wavelength band, 1530 *to* 1565nm, which is typically used in free space optical communications. The described optical terminal telescope has transmission > 98%. The field of view of the telescope is a product of the pointing acquisition and tracking (PAT) requirements for the full terminal system and satisfies the requirements for data transfer over 45,000 km. This envelopes optical links from ground to LEO, and intersatellite links from LEO to GEO.

The invention solves the problem of thermal expansion leading to wavefront aberrations which reduce link budgets. The achievable link budget is one of the first considerations when designing a free space optical communications system as it is used to model system performance and drive design decisions such as the telescope aperture diameter or transmit laser power requirements to support a given bit-error rate (BER). The system and the mirrors have been configured to provide good thermal expansion performance. As described above, the normal to each mirror at the location of the ray that defines the optical axis intersect at a location that is a similar distance from each mirror. The telescope is arranged to take account of thermal expansion so as to minimise the effect such as thermally induced optical aberrations. The telescope is configured to have a thermal centre and further so that any thermal expansion of the telescope is controlled and is symmetric.

The particular combination we describe of two freeform surfaces and a rotationally symmetric tertiary mirror in the optical telescope strike a balance between system complexity and the advantages that are gained through the use of freeform surfaces. The optical terminal comprising telescope, WFOV and NFOV relay systems, provides for a wide field of view system with low aberrations across the field, while reducing the available degrees of freedom to aid the alignment and assembly procedure.

The system is compact and solves the problems of:

- Low mass, small volume: reduce cost of launch on a satellite.
- Large aperture: gathers more light to operate in GEO as well as LEO.
- Unobscured three mirror telescope: avoid the 25-40 % light loss usually associated with three-mirror anastigmat configuration.
- Freeform surfaces: to balance aberrations in a large aperture + small volume.
- Low aberrations: to maximise link budgets.

While low earth orbit, LEO, is mentioned as an example application, it will be appreciated that the system may be used in applications involving higher earth orbits like MEO / GEO and could also involve Lunar orbit or deep space.

Limited degrees of freedom through use of two freeform surfaces + one rotationally symmetric asphere: to make easier the optical assembly, integration, and test for systems of complex mirrors:
A general telescope front end: that can be coupled to different optical benches depending on requirements.

The telescope of the present specification and the optical terminal system as described are advantageously configured for use in free space optical communications. Free space optical communications has applications including for data transfer and quantum key distribution as the atmosphere has little effect on the state of polarisation of the propagating beam. There is a high efficiency transfer of information via free space optical communications compared to radio frequency (RF) communications, particularly in cases where the receiving in-orbit optical terminal has a large aperture diameter for light collection. A large collection aperture maximises the usable link budget. A laser beam transmitted from a ground station will diverge over the propagation distance between the ground and the receiver satellite. Thus, the maximum photon collection from the transmitted laser beam depends on having the largest receiver aperture diameter that is practically possible. A larger transmit aperture also reduces beam divergence making the communications link more efficient. Payloads bound for LEO are restricted in volume and mass as the cost of launch increases with payload scale. These constraints levied by satellite vendors require large aperture astronomical space telescopes to have low f-number and compact optical footprint. Form factor, or compactness, is therefore a highly desirable feature in the design of an optical terminal. That is, reducing the free space distance between telescope mirrors within the satellite receiver. This interplay between compactness and maximising the entrance pupil diameter supported a reduction in f-number. The f-number of an infinitely conjugate optical system is given as:

$$F\#_\infty = \frac{f'}{D_{EnP}}, \qquad\qquad (1)$$

where f' is the back focal length of the telescope and $D_{EnP}$ is the diameter of the telescope entrance pupil. Therefore, the telescope mirrors must increase in optical power in order to focus the beam within a significantly reduced satellite receiver design volume. Traditional telescopes are limited in lowest f-number achievable due to the limitations in the available design degrees of freedom required for aberration balancing between rotationally symmetric reflectors (i.e. non freeform mirrors).

Fast unobscured telescopes according to embodiments of the present specification, with relatively large fields of view have been provided based on the use of freeform optics as described, and the use of at least one freeform mirror. Greater degrees of freedom allow for bending the incoming beam in a small design volume without sacrificing resolution or field of view, importantly while balancing aberrations which would otherwise reduce the optical efficiency.

**Claims**

1. A telescope for use in an optical terminal system configured for free space optical communication, FSOC, operating in earth orbit, and/or for terrestrial line-of-sight links, the optical terminal system comprising the telescope and an optical bench,
   wherein the telescope (200) is configured to receive an incident light beam (500) and to focus the light beam to a telescope focal plane (250) as input to the optical bench;

   the telescope comprising:

   a primary mirror (210);
   a secondary mirror (220); and
   a tertiary mirror (230);

   wherein at least one mirror comprises a freeform mirror configured to control the distribution of light in the focal plane to provide correction of wavefront aberrations across a field of view of the system.

2. The telescope of claim 1, wherein at least one mirror comprises an aspheric mirror having an aspheric surface, the aspheric surface having rotational symmetry.

3. The telescope of claim 1, wherein the telescope comprises an off-axis unobscured three-mirror telescope, wherein each mirror has a tilted and decentred local coordinate system with respect to a central axis.

4. The telescope of any preceding claim, wherein the telescope mirrors are arranged to provide a folded optical path, each of the mirrors is mounted at an angle facing a common central zone, such that the light reflected from each of the mirrors is reflected across the common central zone between the mirrors.

5. The telescope of any preceding claim, wherein the mirrors are configured such that a surface normal at each mirror surface, at a location of reflections of the incident light beam from each mirror, that is travelling along the optical axis, intersect about a thermal centre located in the central optical zone.

6. The telescope of any preceding claim, wherein the primary and secondary mirrors of the telescope comprise freeform mirrors, and wherein the tertiary mirror comprises an aspheric mirror.

7. The telescope of any preceding claim, the, or each freeform mirror comprises a freeform surface, free from rotational symmetry, and positioned to control the distribution of light in the focal plane, to provide correction of wavefront aberrations across a field of view of the system.

8. The telescope of any preceding claim, the telescope comprising an aperture according to one or more of the following:

   (i) the telescope comprising an aperture of the order of 100mm to 150mm in diameter,
   (ii) the telescope comprising an aperture of the order of 124mm in diameter.

9. The telescope of any preceding claim, configured to control polarisation of light passing therethrough, wherein:

   the telescope is configured to provide control of the state of polarisation of light across a pupil at the focal plane and provided as input to the optical bench;
   wherein the incident beam having a first known state of polarisation and the input beam from the telescope to the optical bench has a second known changed state of polarisation;

10. The telescope of any preceding claim, wherein the state of polarisation of the input beam to the optical bench is substantially constant across a pupil at the telescope focal plane.

11. The system of claim 1 wherein the mirrors are arranged according to one or more of the following:

(i) wherein the mirrors comprise Aluminium or an Aluminium Alloy;
(ii) wherein at least one mirror surface comprises a coating;
(iii) wherein all three mirror surfaces comprise a coating;
(iv) wherein the coating comprises: gold;
(v) wherein the coating is a bare gold coating;
(vi) wherein the coating is configured to reduce phase delay at mirror surfaces.

12. The telescope of any preceding claim, the telescope comprising a telescope housing unit, wherein the housing unit is comprised of (i) a metal material, and wherein the metal comprises Aluminium, or an Aluminium alloy; or (ii) suitable thermally matched lightweight, strong material such as carbon fibre reinforced polymer, CFRP.

13. The telescope of any preceding claims, the telescope arranged according to one or more of the following:

(i) comprising a housing unit, the housing unit having a volume of the order of 150x150x150 mm to 250 x 250 x 250mm, and preferably of the order of 200x200x200mm, wherein the mirrors of the telescope are mounted within the housing, in a compact telescope arrangement;
(ii) wherein the telescope has a mass to aperture ratio of 40mm/kg to 50mm/kg.

14. The telescope of any preceding claim, wherein the telescope is configured to maintain optical performance at different operating temperatures and across a wide operating temperature range, wherein the mirrors are configured such that each surface normal at each mirror surface, at a location where incident light beams travelling along the optical axis reflect from each mirror, and intersect at an intersection point located within the system volume, wherein the intersection point is located approximately equidistant from the surface of each of the three mirrors.

15. The telescope of claim 14,

wherein the intersection point defines a thermal centre of the telescope,
wherein the telescope is configured such that thermal expansion of the telescope is controlled about the thermal centre; and
wherein thermal expansion is controlled to be symmetric about the thermal centre.

16. An optical terminal system (100) for free space optical communication, FSOC, the optical terminal system configured to operate in earth orbit, configured for free space optical communications operating in earth orbit and/or for terrestrial line-of-sight links, the system (100) comprising:

a telescope (200) as claimed in any of claims 1-15; and
an optical bench (300). wherein the optical bench comprises at least one field of view, wherein the at least one field of view is a narrow field of view or a wide field of view;
the telescope (200) is configured to receive an incident light beam (500) and to focus the light beam to a telescope focal plane (290) as input to the optical bench.

17. The telescope of any of claims 1-15 or the system of any one of claim 16, wherein the system comprises a full field of view of the order of 0.4 degrees, and wherein the telescope remains diffraction limited across that field of view.

18. The system of any one of claims 16 to 17, wherein the optical terminal system is configured to provide control of polarisation of light passing therethrough according to one or more of the following:

(i) wherein the state of polarisation of the light output is maintained;
(ii) wherein the telescope is configured to provide control of the state of polarisation of light across a pupil at the focal plane and provided as input to the optical bench,

wherein the incident beam having a first known state of polarisation and the input beam from the telescope to the optical bench has a second known changed state of polarisation;

wherein the state of polarisation of the input beam to the optical bench is substantially constant across a pupil at the telescope focal plane;

(iii) wherein the optical bench configured to accept light of various states of polarisation within a range of states of polarisation, wherein the telescope is configured to control the second state of polarisation within that range for input at the optical bench; and wherein the optical bench is configured to apply a correction, as required, to the state of polarisation of light received as input from the telescope.

FIGURE 1

EP 4 686 656 A1

FIGURE 2

EP 4 686 656 A1

Entrance pupil

205
206

M3

230

240

M1

210

202

Solar filter

M2

220

290

207

Z1

FIGURE 3B

External to
spacecraft

Internal to
spacecraft

155

156

157

150

151

Z1

FIGURE 3A

FIGURE 4

FIGURE 5

EP 4 686 656 A1

FIGURE 6A

FIGURE 6B

FIGURE 6C

FIGURE 6D

FIGURE 6E

EP 4 686 656 A1

26

FIGURE 7B

Input:

FIGURE 7A

Input:

Collimating lens group   WFOV coarse pointing 325

NFOV fine pointing 335

360

310

290

305

300

350

370

Entrance pupil

Telescope 200

Solar filter 205

Path that is common to Rx and Tx

Rx path

Tx path

100

FIGURE 8

FIGURE 9A

EP 4 686 656 A1

FIGURE 9B

Europäisches
Patentamt

European
Patent Office

Office européen
des brevets

# EUROPEAN SEARCH REPORT

**Application Number**

EP 24 19 2382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUGOT EMMANUEL ET AL: "A freeform-based, fast, wide-field, and distortion-free camera for ultralow surface brightness surveys", SPACE TELESCOPES AND INSTRUMENTATION 2014: OPTICAL, INFRARED, AND MILLIMETER WAVE, vol. 9143, 14 July 2014 (2014-07-14), page 91434X, XP093222412, DOI: 10.1117/12.2057461 * Tables 1, 3, 6; pages 1, 2, 5 - page 8; figures 5,8 * | 1-3,7 | INV. B64G1/00 G02B17/06 |
| X | ASHCRAFT JAREN N ET AL: "The versatile CubeSat Telescope: going to large apertures in small spacecraft", PROCEEDINGS OF THE SPIE, SPIE, US, vol. 11819, 20 August 2021 (2021-08-20), pages 1181904-1181904, XP060145222, ISSN: 0277-786X, DOI: 10.1117/12.2594884 ISBN: 978-1-5106-5738-0 * Table 1; pages 2-6; figures 1, 4 * | 1,9-18 | |
| X | CN 106 199 938 A (CHANGCHUN INST OPTICS FINE MECH & PHYSICS CAS) 7 December 2016 (2016-12-07) * abstract; figure 1 * | 1,6,8 | **TECHNICAL FIELDS SEARCHED (IPC)** B64G G02B |
| X | US 2012/243114 A1 (ROLLAND JANNICK P [US] ET AL) 27 September 2012 (2012-09-27) * paragraphs [0012], [0054], [0059], [0062] - [0064]; figures 4(a),8(c), 13 * | 1,4,5 | |

The present search report has been drawn up for all claims

| Place of search | Date of completion of the search | Examiner |
|---|---|---|
| Munich | 21 November 2024 | Feeney, Orla |

EPO FORM 1503 03.82 (P4C01)

## ANNEX TO THE EUROPEAN SEARCH REPORT
## ON EUROPEAN PATENT APPLICATION NO.

EP 24 19 2382

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2024

| Patent document cited in search report | | Publication date | Patent family member(s) | | Publication date |
|---|---|---|---|---|---|
| CN 106199938 | A | 07-12-2016 | NONE | | |
| US 2012243114 | A1 | 27-09-2012 | US | 2012243001 A1 | 27-09-2012 |
| | | | US | 2012243114 A1 | 27-09-2012 |

EPO FORM P0459

For more details about this annex : see Official Journal of the European Patent Office, No. 12/82

**REFERENCES CITED IN THE DESCRIPTION**

**Non-patent literature cited in the description**

- **DEVOE**. Optical overview and qualification of the LLCD space terminal. *International Conference on Space optics*, 17 November 2017